# EUROPEAN PATENT APPLICATION

(11) **EP 1 647 905 A1**
(43) Date of publication of application: **19.04.2006**
(21) Application number: 05109099.1
(22) Date of filing: 30.09.2005
(51) Int. Cl.: G06F 17/30

(54) **Method and system for mapping of XML schema data into relational data structures**

(30) Priority: 15.10.2004 US 619043 P; 12.07.2005 US 179918
(71) Applicant: Microsoft Corporation, Redmond WA 98052 (US)
(72) Inventor: Dibble, Clifford T., 98052, Redmond (US); Tomic, Dragan, 98052, Redmond (US); Smith, Samuel H., 98052, Redmond (US); Pal, Shankar, 98052, Redmond (US); Inglikow, Yuri, 98052, Redmond (US); Oks, Stanislav A., 98052, Redmond (US)
(74) Representative: Grünecker, Kinkeldey, Stockmair & Schwanhäusser Anwaltssozietät

(57) **Abstract**

Translation architecture that facilitates translation between schema data and relational structures. The architecture includes a translation component that consumes schema data (*e*.*g*., an XML schema) that includes a schema structure, validates the schema structure, and persists in memory a representation of the schema as a relational format. Since schemas are shredded into tables, instance validation loads only the necessary components to perform validation. During validation, only parts of the schema that are used are loaded and cached. A schema cache stores the in-memory representation of schema optimized for instance validation. Schema components are loaded from metadata into main memory as read-only objects such that multiple users can use the in-memory objects for validation, query processing, query optimization and storage optimization of XML instance data

## Description

### CROSS-REFERENCE TO RELATED APPLICATIONS

This application claims the benefit of U.S. Provisional Patent application Serial No. 60/619,043 entitled "MAPPING OF XML SCHEMA DATA INTO RELATIONAL DATABASE STRUCTURES" and filed October 15, 2004, the entirety of which is incorporated by reference herein.

### BACKGROUND

The XML (extended Markup Language) provides a standard way of tagging data so that the data can be read and interpreted by a variety of Web browsers. Given the enormous proliferation of web hosts and applications on global communications networks such as the Internet, XML documents are used extensively in daily transactions.

Document type definition (DTD) is one technology that defines the document structure of an XML document according to a list of legal elements or building blocks. From a DTD perspective, all XML documents (and HTML documents) are made up of the following simple building blocks: elements, tags (used to markup elements), attributes (used to provide extra information about elements), entities (variables used to define common text), PCDATA (Parsed Character Data), and CDATA (Character Data). Elements are the main building blocks of XML documents. Examples of XML elements could be "note" and "message." Elements can contain text, other elements, or be empty.

XML Schema is a W3C (World Wide Web Consortium) standard that defines a schema definition language for an XML data model. Schema definitions (*e*.*g*., a type definition such as CustomerType that describes the structure of information regarding each Customer) can be used to validate the content and the structure of XML instance documents. The XML schema document is an XML document that is expressed in a different way than the table and column definitions of a relational database system. The type information supplied in an XML schema document can also be used to check XML queries for correctness, and optimize XML queries and XML storage.

XML schema provides a more robust replacement to DTD technology to include the following: XML schema is extensible to future additions to allow extending or restricting a type definition; XML schema is richer and more useful than DTD to allow, for example, the capability to define user-defined types; XML schema is written in XML; XML schema supports data types; and XML schema support namespaces. Unlike DTD, XML schema provides separation between type and element definitions, so that multiple elements (eg., LocalCustomer and DistantCustomer) of the same type can be defined using a common type definition (*e.g.*, CustomerType). An XML schema document can import other XML schema documents, thereby setting up a type library system.

In one application example, having the capability to store XML schema documents in relational structures can provide significant advantages. Type definitions can be searched efficiently using relational index structures (instead of parsing the XML schema documents), and appropriate pieces of the XML schema documents (*e*.*g*., only CustomerType definition) can be selectively loaded into memory buffers for validations of XML instances, which provides a significant performance improvement. Additionally, SQL (Structured Query Language) views could be provided on the relational storage for relational users to know about stored XML schema documents. Thus, there is a substantial unmet need for a mechanism that maps schema data into other database structures.

### SUMMARY

The following presents a simplified summary in order to provide a basic understanding of some aspects of the disclosed innovation. This summary is not an extensive overview, and it is not intended to identify key/critical elements or to delineate the scope thereof. Its sole purpose is to present some concepts in a simplified form as a prelude to the more detailed description that is presented later.

The subject innovation provides a mechanism by which XML schemas are stored and managed internally within a SQL server metadata component.

In one aspect thereof, architecture is disclosed that facilitates translation between an XML schema and relational structures. The XML schema describes a structure of an XML document. The innovation finds application to a SQL server that supports the XML type system in which XML schema documents are stored in relational tables. Other components of the SQL server, such as an XML query processor and optimizer, can use the XML type system for query compilation and execution. Furthermore, advanced applications related to, for example, a repository can be built on top of the XML type system.

Storing an XML schema document in a relational database system presents new challenges. For example, the identification of the XML schema document (*e.g.*, using its targetnamespace), and type definitions specified within the XML schema document are mapped to relational rows that capture the nature and the type of the definitions (*e*.*g*., an element type definition such as CustomerType in the XML schema document-when stored in the relational system-should remember the fact that it is an element type definition). Additionally, a type hierarchy should be recorded, simple type facets provide additional information that can be captured, and it is also possible to reconstruct the XML schema type definitions from the relational structures.

The novelty of this approach is multi-fold. Firstly, searches for specific XML schema components by ID or by Name are fast. All XML schema component searches (by name or by id) utilize index seeks of the relational store, which minimizes the number of I/O operations. Secondly, the derivation chain structure is also indexed. Therefore, determining type relationships is easy and efficient. Thirdly, because shredded schemas are regular relational objects, various relational views of the XML schema components can be exposed. For example, the different XML schema components (*e.g*., elements, attributes, types, and wildcards) can be exposed to users in one component table. Fourthly, shredding the XML schemas allows users to write any queries they desire.

Finally, because XML schemas are shredded into tables, XML instance validation loads only the necessary components to perform validation. During validation, only parts of the schema that are used are loaded and cached. A schema cache stores an in-memory representation of XML schema components optimized for XML instance validation. XML schema components are loaded from metadata tables into main memory as read-only objects such that multiple users can use the in-memory objects for validation. If the XML schema is changed during the operation, the schema cache entries are invalidated. Additionally, if the database server is under heavy load, unused schema cache entries are unloaded. In view of the above novel capabilities, a scalable system is provided that can operate in large enterprise environments involving thousands ofXML schema components and supporting many concurrent users.

In another aspect, a view component facilitates viewing internal data in a read-only manner. Catalog views provide a tabular representation of the SQL server's internal metadata structures. Users can query the views, but not modify them directly.

To the accomplishment of the foregoing and related ends, certain illustrative aspects of the disclosed innovation are described herein in connection with the following description and the annexed drawings. These aspects are indicative, however, of but a few of the various ways in which the principles disclosed herein can be employed and is intended to include all such aspects and their equivalents. Other advantages and novel features will become apparent from the following detailed description when considered in conjunction with the drawings.

### BRIEF DESCRIPTION OF THE DRAWINGS

FIG. 1 illustrates a system that facilitates translation between XML schema data and relational data.

FIG. 2 illustrates a flow chart of one methodology for XML/relational translation.

FIG. 3 illustrates a system of tables into which XML schema data is shredded.

FIG. 4 illustrates a methodology of processing XML schema data into tables.

FIG. 5 illustrates a more detailed table system and the metadata that can be stored in each.

FIG. 6 illustrates a system that facilitates translation with cache, memory management, and internal views.

FIG. 7 illustrates a diagram of catalog views that can be obtained of various internal aspects.

FIG. 8 illustrates a block diagram of components that can leverage a memory management interface (MMI).

FIG. 9 illustrates an object diagram which outlines design of an MMClient interface.

FIG. 10 illustrates a UML diagram that represents a catalog view of an exposed relational format of the shredded XML schema in accordance with an instance.

FIG. 11 illustrates a block diagram of a computer operable to execute the disclosed translation architecture.

FIG. 12 illustrates a schematic block diagram of an exemplary translation computing environment.

### DETAILED DESCRIPTION

The innovation is now described with reference to the drawings, wherein like reference numerals are used to refer to like elements throughout. In the following description, for purposes of explanation, numerous specific details are set forth in order to provide a thorough understanding thereof. It may be evident, however, that the innovation can be practiced without these specific details. In other instances, well-known structures and devices are shown in block diagram form in order to facilitate a description thereof.

As used in this application, the terms "component" and "system" are intended to refer to a computer-related entity, either hardware, a combination of hardware and software, software, or software in execution. For example, a component can be, but is not limited to being, a process running on a processor, a processor, a hard disk drive, multiple storage drives (of optical and/or magnetic storage medium), an object, an executable, a thread of execution, a program, and/or a computer. By way of illustration, both an application running on a server and the server can be a component. One or more components can reside within a process and/or thread of execution, and a component can be localized on one computer and/or distributed between two or more computers.

The XML (eXtended Markup Language) Schema specification describes the structure of an XML document, and it is verbose and complicated. The innovation finds application to a SQL (Structured Query Language) server that supports the XML type system in which XML schema documents are stored in relational tables, for example. However, this is but one exemplary application, and should not be construed as limiting, since the invention finds application in translation between any two disparate data structures. The disclosed innovation shows that a schema definition language need not necessarily be stored in the format in which it is provided, but can be stored in a different format that still captures all the information about schema components. A relational representation is one such possibility; others include object-relational, object-oriented, or even some other XML format, for example. Other components of the SQL server, such as an XML query processor and optimizer, use the XML type system for query compilation and execution. Furthermore, advanced applications, such as related to a repository, can be built on top of the XML type system.

Storing an XML Schema document in a relational database system, for example, can present challenges. For example, the identification of the XML schema document (*e*.*g*., using its targetnamespace), and type definitions specified within the XML schema document are mapped to relational rows that capture the nature and the type of the definitions (*e.g.*, an element type definition such as CustomerType in the XML schema document-when stored in the relational system-should remember the fact that it is an element type definition). Additionally, a type hierarchy should be recorded, simple type facets provide additional information that can be captured, and it is also possible to reconstruct the XML schema type definitions from the relational structures.

The novelty of this approach is multi-fold. Firstly, searches for specific components by ID or by Name are fast. All XML Schema component searches (by name or by id) utilize index seeks of the relational store, which minimizes the number of I/O operations. Secondly, the derivation chain structure is also indexed.
Therefore, determining type relationships is easy and efficient. Thirdly, because shredded schemas are regular relational objects various relational views of the XML schema components can be exposed. For example, the different XML schema components (*e*.*g*., elements, attributes, types, and wildcards) can be exposed to users in one component table. Fourthly, shredding the XML schemas allows users to write any queries they desire.

Finally, because XML schemas are shredded into tables, XML instance validation loads only the necessary components to perform validation. During validation, only parts of the schema that are used are loaded and cached. The "Schema Cache" stores the in-memory representation of XML schema optimized for XML instance validation. XML schema components are loaded from metadata into main memory as read-only objects such that multiple users can use the in-memory objects for validation. If the XML schema is changed during the operation, the schema cache entries are invalidated. Additionally, if the database server is under heavy load, unused schema cache entries are unloaded. In view of the above novel capabilities, a scalable system is provided that can operate in large enterprise environments involving thousands of XML schema components and supporting many concurrent users.

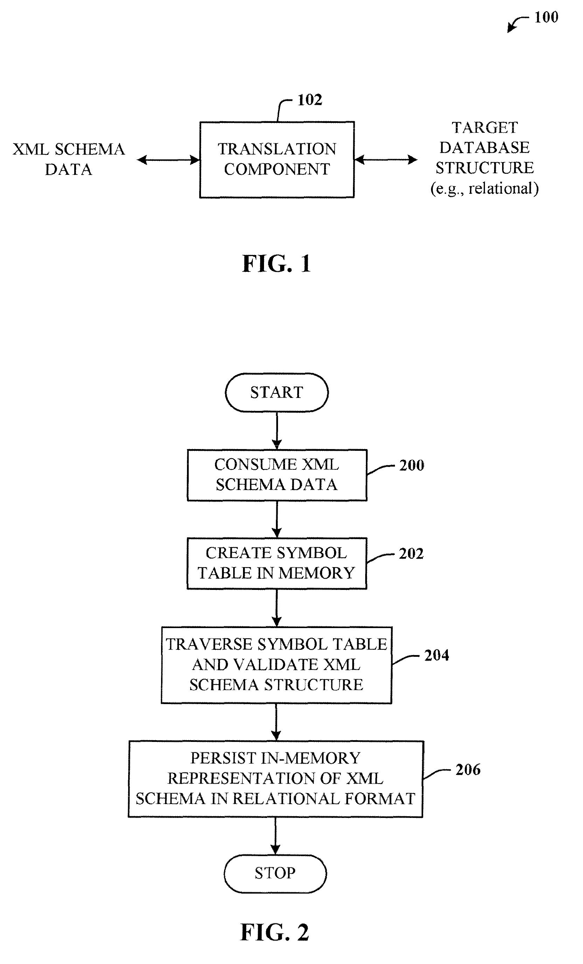

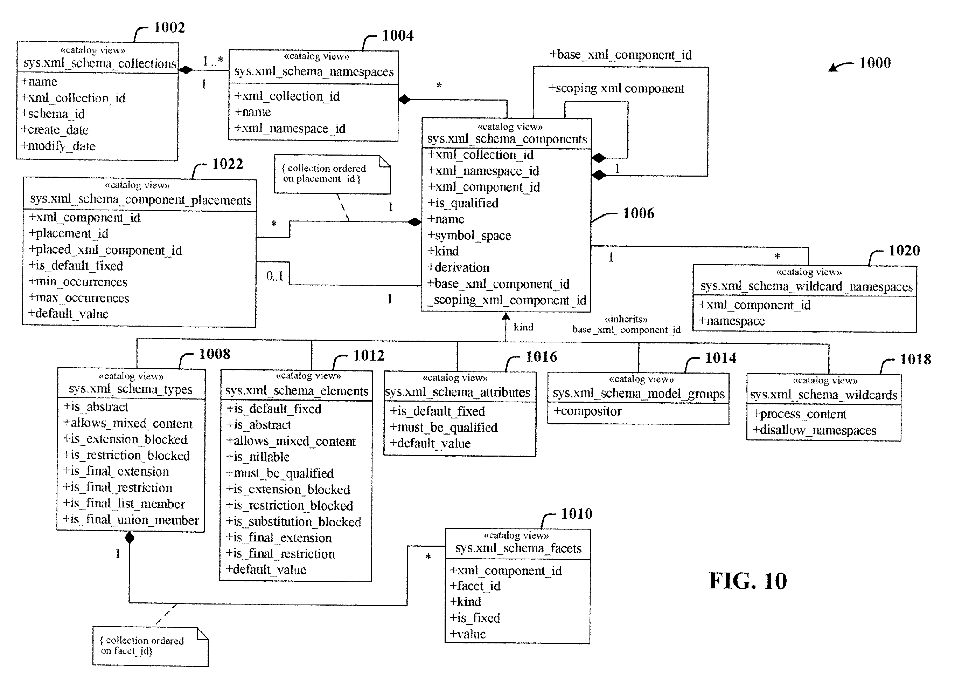

Referring now to FIG. 1, there is illustrated a system 100 that facilitates translation between XML schema data and other data structures (*e.g.*, relational data). A translation component 102 provides the translation capabilities (including validation of the XML schema) by decomposing the XML schema into tables of metadata that can be selectively accessed to facilitate interfacing of XML data to a relational data structure. Note that although translation is described in FIG. 1 with respect to an input XML schema to relational mapping, the disclosed translation architecture is not restricted thereto, but finds application to any input schema that is translated to a relational structure and back. Such a target relational schema illustrated herein at FIG. 10 is capable of expressing XSD. Accordingly, in order to translate the schema encoded in RDF (resource description format), the target schema would be very different.

Referring now to FIG. 2, there is illustrated a flow chart of one methodology for XML/relational translation. While, for purposes of simplicity of explanation, the one or more methodologies shown herein, *e.g*., in the form of a flow chart, are shown and described as a series of acts, it is to be understood and appreciated that the subject invention is not limited by the order of acts, as some acts may, in accordance with the invention, occur in a different order and/or concurrently with other acts from that shown and described herein. For example, those skilled in the art will understand and appreciate that a methodology could alternatively be represented as a series of interrelated states or events, such as in a state diagram. Moreover, not all illustrated acts may be required to implement a methodology in accordance with the invention.

Translation from XML to a relational representation of the XML schema can consist of several phases. At 200, in a first phase, XML schema data is consumed in preparation for the translation process. At 202, a symbol table is created in memory (in-memory representation of the XML schema). In a second phase, at 204, the symbol table is traversed and the structure of the XML schema is validated. In a final phase, at 206, the in-memory representation of the XML schema is persisted in a relational format.

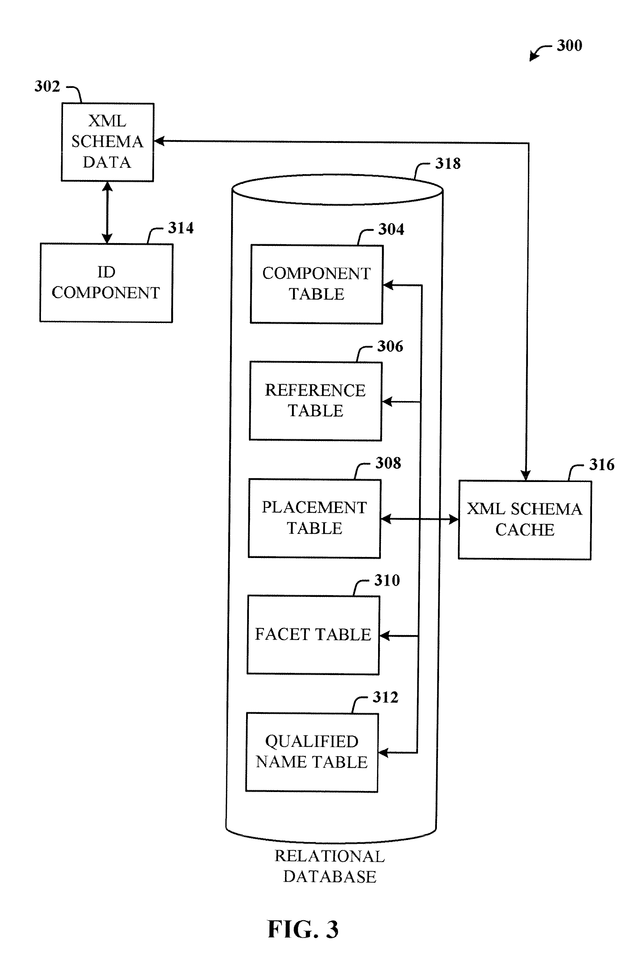

During the final phase of persisting data, the novel code populates metadata tables that describe the structure of the XML Schema types. FIG. 3 illustrates a system 300 of tables in a relational database into which XML schema data 302 is shredded. This is a write-through cache. In one implementation, the XML schema data 302 is persisted as metadata in several tables: a component table 304, a reference table 306, a placement table 308, a facet table 310, and a qualified name table 312. An ID component 314 interfaces to the XML schema data 302 in order to assign an identifier (*e.g.*, a component ID) to each component thereof. A cache memory 316 interfaces to each of the tables (304, 306, 308, 310, and 312) such that the contents of any single table or combination of tables can be accessed and persisted therein to provide improved data access with a relational database 318. Data is read into the XML schema cache 316 and processed into the tables of the relation database 318. External clients access the relational database, and if need be, the cache 316 will read it from the tables. Similarly, when the translator component creates the relational data, it writes to the cache 316, which in turn writes a persisted copy to the table on disk. In this way, the in-memory copy is always in sync with the on-disk copy.

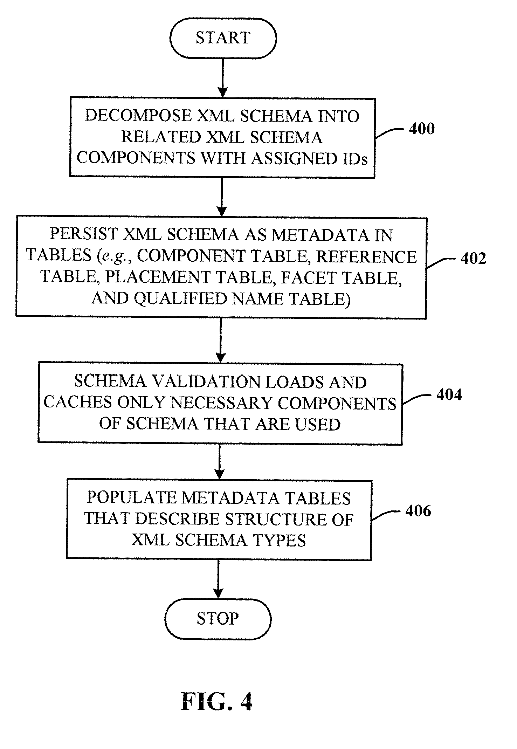

Accordingly, FIG. 4 illustrates a methodology of processing XML schema data into tables. At 400, the XML schema data is decomposed into related XML Schema components with assigned IDs. At 402, the XML schema is persisted as metadata in the tables. At 404, the validation process loads and caches only necessary schema components that are to be used for the validation of the XML schema data.
At 406, the tables are populated with data that describes the structure of the XML schema types.

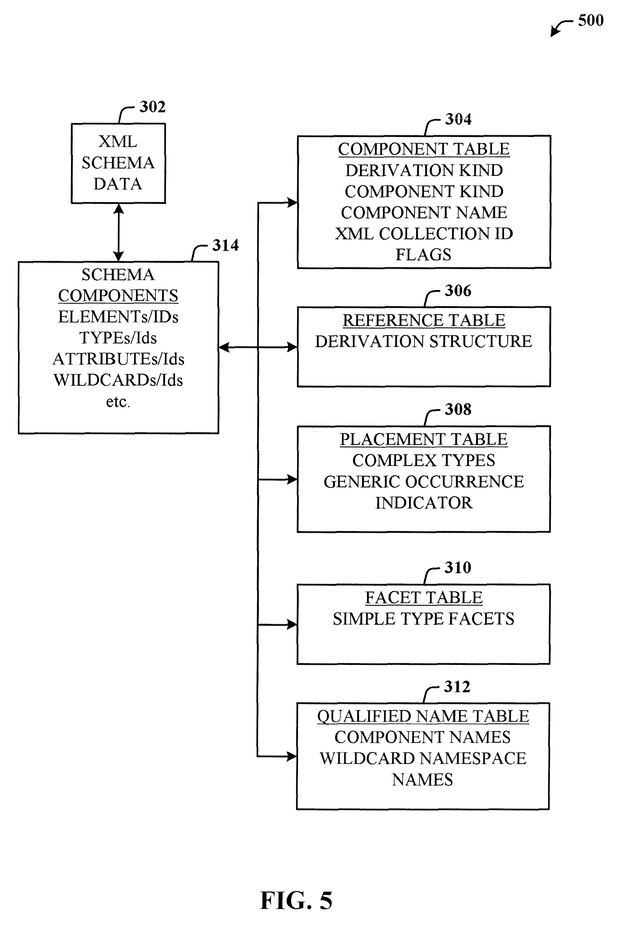

FIG. 5 shows a more detailed table system 500 and the metadata that can be stored in each. The XML schema data 302 includes several flavors of XML components (Elements, Types, Attributes, Wildcards, etc.) that are assigned IDs by the ED component 314. In one implementation, each of the components is assigned an ID (denoted as ELEMENTs/IDs, TYPEs/IDs, ATTRIBUTEs/IDs, WILDCARDs/IDs, *etc.*). Basic properties of XML Schema components are recorded in the component table 304, and include attributes which are derivation kind, component kind, component name, XML collection ID, and various flags. A derivation structure related to the derivation kind is recorded in the reference table 306. Simple type facets are recorded in the facet table 310. For complex types, the type hierarchy is specified through placements of the placement table 308. The type hierarchy is stored in [sys.xml_schema_components],[scoping_xml_component_id] as well as in [sys.xml_schema_component_placements].[placed_xml_component_id]. The placement table also stores the relative order of the siblings in the XML schema data, which the component table does not. The column [sys.xml_schema_components].[base_xml_component_id] stores type derivation (as parent-child hierarchy). It is to be understood that component placement alone is not sufficient to define the type hierarchy. Placements also contain generic occurrence indicator. Essentially, placements can be thought of as edges between graph nodes formed by XML Schema components. All of the component names, as well as wildcard namespace names, are recorded in the qualified name table 312.

A new concept called XML schema collection can be used for management of XML schemas in the SQL Server 2005 database, and is described in a previous pending U.S. Patent Application Serial No. 10/726,080 entitled "XML Schema Collections and Corresponding Systems and Methods" filed December 1, 2003, by the assignee of this application. The collection is a metadata object into which one or more XML schemas may be loaded at the same time the XML schema collection is created using a statement CREATE XML SCHEMA COLLECTION.

Once the XML schema collection has been created, more XML schemas may be loaded into it by altering the XML schema collection using a statement ALTER XML SCHEMA COLLECTION. The XML schema collection can be removed from the system using the statement DROP XML SCHEMA COLLECTION.

Following is an example of creating an XML schema collection and loading the XML schema for books into it.

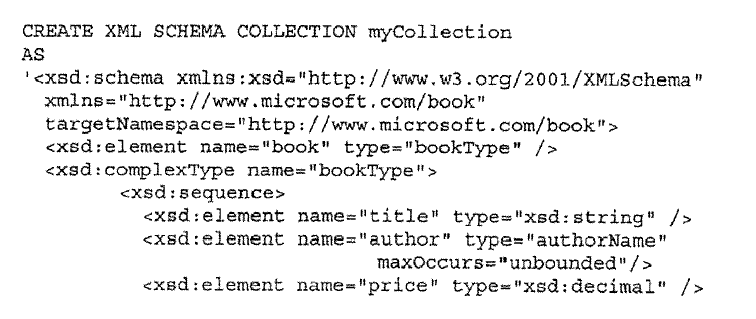

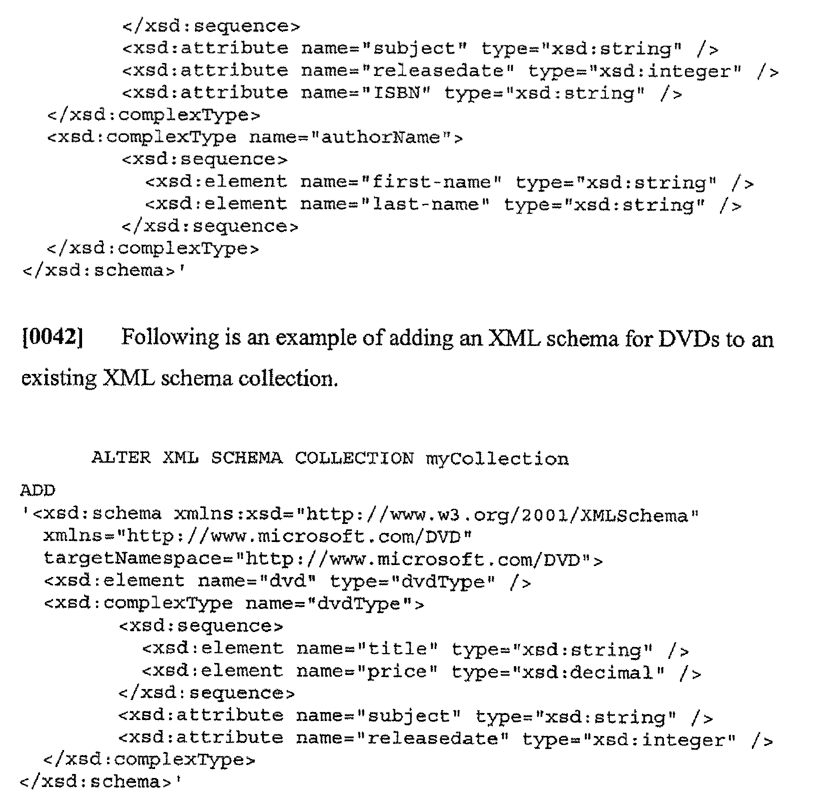

Following is an example of dropping the XML schema collection.

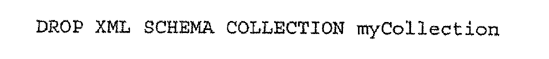

With respect to internal cache storage of XML schemas, an XSD (XML Schema Definition) type cache (also called herein a schema cache) is implemented in support of performance and resource utilization needs. Compiling content models is extremely memory and I/O intensive. For example, a type with several facets, few elements and few attributes would require a lookup to many (*e.g.,* 20-50) metadata objects. While loading parts of XSD is already an improvement over most commercial applications, caching improves data access due to high concurrency requirements placed on the server (*e.g.*, an SQL Server). Note that although the following description is in the context of an SQL server, it is to be understood that other suitable server architectures can benefit from the disclosed cache management mechanism.

The input schemas (*e.g.*, XML) are shredded into many relational tables and only the most frequently used pieces of schema can be selectively loaded and cached. Furthermore, since the relational layout includes several primary and secondary indexes, the loading of schemas will also be fast. Because XML schemas are shredded into tables, XML instance validation loads only the necessary components to perform validation. During validation, only parts of the schema that are used are loaded and cached. The schema cache stores the in-memory representation of XML schema optimized for XML instance validation. XML schema components are loaded from metadata into main memory as read-only objects such that multiple users can use the in-memory objects for validation. If the XML schema is changed during the operation, the schema cache entries are invalidated. Additionally, if the database server is under heavy load, unused schema cache entries are unloaded. In view of the above novel capabilities, a scalable system is provided that can operate in large enterprise environments involving thousands of XML schema components and supporting many concurrent users.

Once the required schemas are located in relational tables, only the parts relevant to Type, Attribute, or Element definition will be added to the XSD type cache. In implementation, a reverse mechanism from the schema import is used: first, a symbol table is created, and then, validation structures are derived that are cached.

For caching, the SQL Server caching framework can be used which keeps the most active entries in memory while less frequently used entries are removed periodically. In addition, the mechanism for cache cleanup is driven by the memory pressure currently present on the system. If the system is overloaded, entries will be more aggressively removed from the cache. The algorithm for cache cleanup also takes into consideration the number of I/O reads required to compute the entry and the total memory required to compute the cache entry.

A final property of relational representation of XML schemas is a performance benefit due to the indexes built on XML schema component tables and other schema tables. Inheritance can be efficiently checked. Inheritance checking is used in several parts of SQL Server, mainly during data import and for XQuery casting.

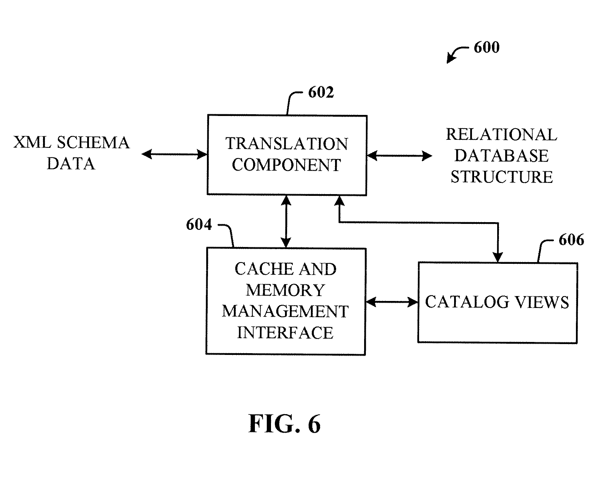

FIG. 6 illustrates a system that facilitates translation with cache, memory management, and internal views. The system 600 includes a translation component 602 that provides translation capabilities by decomposing a schema structure (*e*.*g*., an XML schema) into tables of metadata that can be selectively accessed to facilitate interfacing of XML data to a relational data structure. A cache memory and memory management interface (MMI) component 604 facilitates storing the tables of metadata in the cache memory for rapid access of only necessary XML components. A user provides data that conforms to the XML schema. The system 600 validates that the user-supplied data actually conforms to the XML schema. In other words, a database engine looks at both the user-supplied data and the schema, and determines how to efficiently validate the data. A views component 606 allows a user to view the internal metadata tables in a tabular format. Note that although cache and memory management is described in FIG. 6 with respect to an input XML schema to relational mapping, the disclosed caching management architecture is not restricted thereto, but finds application of the translation between any input schema and relational structure.

During DDL (Data Definition Language) (CREATE, ALTER and DROP XML SCHEMA COLLECTION) the namespace version is changed during DDL import or DDL drop. This will invalidate any existing cache entries. In one implementation, if a database version change is detected the whole cache is flushed.

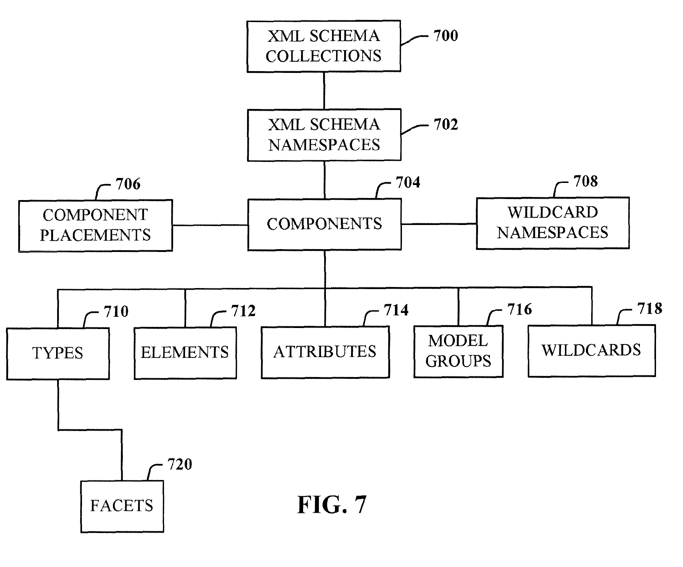

FIG. 7 illustrates a number of different catalog views that can be employed. At 700, an XML schema collections view is provided, followed by an XML schema namespaces view 702. At 704, components catalog view is provided, which is supplemented by a component placements view 706 and a wildcard namespaces view 708. The components view 704 is supplemented by a types view 710 (contains more information about the type definitions), an elements view 712 (contains additional information about the element definitions), an attributes view 714 (contains additional information about the attribute definitions), a model groups view 716, and a wildcards view 718. From the types view extends a facets view 720. These are described in greater detail in FIG. 10.

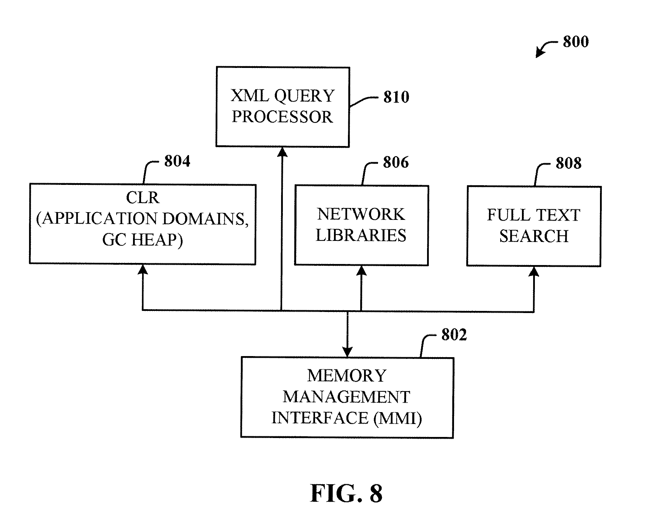

FIG. 8 illustrates a block diagram of components that can leverage an MMI. The components that will leverage the MMI 802 are the CLR 804, network libraries 806 and full text search 808. An XML query processor 810 is depicted as a direct consumer of a query table. The CLR 804 has two major components that can be leveraging the MMI to respond to memory pressure: application domains, and garbage collected (GC) memory. One component, application domains, can be large memory consumers. Application domains are loaded on demand, and can be unloaded, once they are not in use. The entry data size for application domains is on average about 1MB. The number of loaded application domains is restricted by an amount of Virtual Memory. In one implementation, the CLR can be allocated externally to the SQL server's memory management mechanism. In another implementation, the CLR will be converted to use the memory management mechanism of the subject innovation. Lifetime of the entry in the cache can be defined by usage and its cost.

The CLR 804 has a second component, the GC memory, which can be considered as a heap. CLR objects can be allocated out of this heap. This heap could be shrunk through a mechanism called garbage collection, that is, reclaiming back unusable memory. The size af GC heap is limited by virtual and physical memory size. In one implementation, there are as many GC heaps as a number of CPUs in the system. In one instance, the CLR is allocated externally to the SQL server's memory management mechanism. In another instance, the CLR can be converted to the disclosed memory management mechanism. A costing mechanism can be based on GC heaps sizes and their usage. The GC heap cannot be discarded, but only can be shrunk.

With respect to network libraries page pool, to perform network reads and writes, network libraries can require memory pages that are multiples of OS page sizes. Page size can be different depending on the client configuration. The pool size can depend on the activity of the clients, and the page size configuration. In one instance, network libraries allocate a page directly from the OS and keep a pool of free pages. The pages are usually affinitized to either a scheduler or a network card. There is no real costing. Under memory pressure, network libraries can shrink their pools. The lifetime of the page in the free pool can be defined by current memory pressure. An XML schema cache is about 256-2KB in entry data size, has an unlimited cache size, the allocation mechanism is memory object per type, costing is by CPU + disk I/O + network I/O, and the lifetime can be cost + usage.

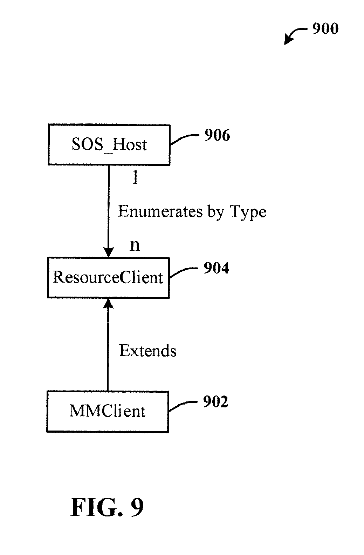

FIG. 9 depicts an object diagram 900 which outlines design of a memory manager client (denoted MMClient) interface. A memory manager client 902 leverages a ResourceClient mechanism 904. The ResourceClient 904 is registered with an SOS_Host object 906 and gets notification per each resource for which it is registered. The SOS_Host object 906 implements resource ownership. The ResourceClient interface 904 should be implemented by clients that consume resources. MMClient 902 generalizes the ResourceClient interface 904 for the large memory consumers. Consumers such as full text, network libraries, and CLR can use the MMClient interface 902. The MMClient 902 extents the ResourceClient interface 904 for large memory consumers. The MMClient 902 exposes APIs such as Alloc/Free, VirtualAlloc/VirtualFree, and Map/Unmap for shared memory. Consumers that are interested in caching data can leverage the CacheStore interface to cache their data. Internally, CacheStore generalizes the MMClient interface 902.

FIG. 10 illustrates a UML (Unified Modeling Language) diagram 1000 that represents a catalog view of an exposed relational format of the shredded XML schema in accordance with an instance. Catalog views provide a tabular representation of SQL Server's internal metadata structures. Users have read-only query access to the catalog views. Several catalog views are described herein for XML schema collections and XML schemas. The following sections describe the catalog views with a example of a ''books'' schema loaded into the XML schema collection (myCollection) to give some details of XML schema storage. The novel innovation described herein is a mechanism by which XML schemas are stored and managed internally within an SQL Server metadata component. FIG. 10 illustrates a diagram of views that can be obtained of various internal instances.

A sys.xml_schema_collections catalog view 1002 can include a row per XML schema collection. An XML schema collection is a named set of XSD definitions. The XML schema collection itself can be contained in a relational schema, and it is identified by a schema-scoped SQL name. The values xml_collection_id and (schema_id, name) are unique for this view.

| Column Name | Data Type | Description |
|---|---|---|
| xml_collection_id | int | ID of the XML schema collection. Unique within the database. |
| schema_id | int | ID of the relational schema that contains this XML schema collection. |
| name | sysname | Name of the XML schema collection. |
| create date | datetime | Date XML schema collection was created. |
| modify date | datetime | Date XML schema collection was last ALTERED. |

Example: Rows in sys.xml_schema_collections after the XML schema collection myCollection are created.

| | | | | | |
|---|---|---|---|---|---|
| 1 | 4 | NULL | sys | year-07-06 06:48:28.680 | year-07-06 06:48:28.680 |
| 65537 | 1 | NULL | myCollection | year -10-07 14:47:57.940 | year-10-07 14:47:57.940 |

A sys.xml_schema_namespaces catalog view 1004 contains one row per XSD-defined XML Namespace. The (collection_id, namespace_id) and (collection_id, name) values are unique within the view.

| Column Name | Data Type | Description |
|---|---|---|
| xml_collection_id | int | ID of the XML schema collection that contains this namespace. |
| name | nvarchar (4000) | Name of xml-namespace. The name = '' (i.e., the empty string), denotes the "no target namespace" |
| xml_namespace_id | int | 1-based ordinal that uniquely identifies xml-namespace in the XML schema collection. |

Example: Rows in sys.xml_schema_namespaces after the XML schema collection myCollection are created.

| | | |
|---|---|---|
| 1 | http://www.w3.org/2001/XMLSchema | 1 |
| 65537 | http://www.microsoft.com/book | 1 |

A sys.xml_schema_components catalog view 1006 contains one row per component of an XML schema. The pair (collection_id, namespace _id) is a compound foreign key to the containing namespace. xml_component_id is unique. For named components, (symbol_space, name, scoping_xml_component_id, is_qualified, xml_namespace_id, xml_collection_id) is also unique. There are two recursive relationships. The first is determined by the base_xml_component_id foreign key. If not NULL, then it is a reference to the parent component in an inheritance hierarchy. The other is determined by scoping_xml_component_id foreign key. If NULL, the component has a global scope. If not NULL, then it is a reference to some other XML component that forms the scoping namespace.

| Column Name | Data Type | Description | |
|---|---|---|---|
| xml_component_id | int | Uniquely identifies xml-component in the database. | |
| xml_collection_id | int | ID of the XML schema collection that contains this component's namespace. | |
| xml_namespace_id | int | Id of xml namespace within the collection. | |
| is_qualified | bit | 1 if this component has an explicit namespace qualifier. | |
| | | 0 if this is a locally scoped component In this case, the pair (namespace_id, collection_id) will refer to the "no namespace" targetNamespace. Will = 1 for wildcard components. | |
| name | nvarchar (4000) | Name of component Will be NULL if the component is unnamed. | |
| symbol_space | char(1) | "Space" in which this symbol-name is unique, based | |
| | | on kind, one of: | |
| | | | N = None |
| | | | T = Type |
| | | | E = Element |
| | | | M = Model-Group |
| | | | A = Attribute |
| | | | G = Attribute-Group |
| symbol_space_desc | nvarchar (60) | Description of "space" in which this symbol-name is unique, based on kind, one of: | |
| | | | NONE |
| | | | TYPE |
| | | | ELEMENT |
| | | | MODEL_GROUP |
| | | | ATTRIBUTE |
| | | | ATTRIBUTE GROUP |
| kind | char(1) | Kind of xml component, one of: | |
| | | | N = "Any" Type (special intrinsic component) |
| | | | Z = "Any Simple" Type (special intrinsic component) |
| | | | P = Primitive Type (intrinsic types) |
| | | | S = Simple Type |
| | | | L = List Type |
| | | | U = Union Type |
| | | | C = "Complex Simple" Type (derived from Simple) |
| | | | K = Camplex Type |
| | | | E = Element |
| | | | M = Model-Group |
| | | | W = Element-Wildcard |
| | | | A = Attribute |
| | | | G = Attribute-Group |
| | | | V = Attribute-Wildcard |
| kind_desc | nvarchar (60) | Kind of xml component, one of: | |
| | | | ANY_TYPE |
| | | | ANY_SIMPLE_TYPE |
| | | | PRIMITIVE_TYPE |
| | | | SIMPLE_TYPE |
| | | | LIST_TYPE |
| | | | UNION_TYPE |
| | | | COMPLEX_SIMPLE_TYPE |
| | | | COMPLEX_TYPE |
| | | | ELEMENT |
| | | | MODEL_GROUP |
| | | | ELEMENT_WILDCARD |
| | | | ATTRIBUTE |
| | | | ATTRIBUTE_GROUP |
| | | | ATTRIBUTE WILDCARD |
| derivation | char(1) | Derivation method for derived types, one of: | |
| | | | N = None (not derived) |
| | | | X = Extension |
| | | | R = Restriction |
| | | | S = Substitution |
| derivation_desc | nvarchar (60) | Description of derivation method for derived types, one of: | |
| | | | NONE |
| | | | EXTENSION |
| | | | RESTRICTION |
| | | | SUBSTITUTION |
| base_xml_component_id | int | Id of component from which this is derived. NULL if none. | |
| scoping_xml_component_id | int | Id of scoping component. NULL if none (global scope). | |

A sys.xml_schema_types catalog view 1008 contains one row per xml-component that is a Type (symbol_space af T).

| Column Name | Data Type | Description |
|---|---|---|
| <inherited columns> | -- | <Inherits from sys.xml_schema_components> |
| is_abstract | bit | If 1, the type is an abstract type (i.e. the abstract attribute on the complexType definition is true). All instances of an element of this type must use xsi:type to indicate a derived type that is not abstract. Default is 0 (i.e., type is not abstract). |
| allows_mixed_content | bit | If 1, mixed content is allowed (i.e., mixed attribute on the complexType definition is true). Default is 0 (mixed content is not allowed) |
| is_extension_blocked | bit | If 1, replacement with an extension of the type is blocked in instances when the block attribute on the complexType definition or the blockDefault attribute of the ancestor <schema> element information item is set to "extension" or "#all" Default is 0 (i.e., replacement with extension not blocked) |
| is_restriction_blocked | bit | If 1, replacement with a restriction of the type is blocked in instances when the block attribute on the complexType definition or the blockDefault attribute of the ancestor <schema> element information item is set to "restriction" or "#all" Default is 0 (i.e., replacement with restriction not blocked) |
| is_final_extension | bit | If 1, derivation by extension of the type is blocked when the final attribute on the complexType definition or the finalDefault attribute of the ancestor <schema> element information item is set to "extension" or "#all" Default is 0 (i.e., extension is allowed) |
| is_final_restriction | bit | If 1, derivation by restriction of the type is blocked when the final attribute on the simple or complex type definition or the finalDefault attribute of the |
| | | ancestor <schema> element information item is set to "restriction" or "#all" Default is 0 (i.e., restriction is allowed) |
| is_final_list_member | bit | If 1, this simple type cannot be used as the item type in a list. Default is 0 (i.e., this type is a complex type or it can be used as list item type) |
| is_final_union_member | bit | If 1, this simple type cannot be used as the member type of a union type. Default is 0 (i.e., this type is a complex type or it can be used as union member type) |

A sys.xml_schema_facets catalog view 1010 contains one row per facet (restriction) of an xml-type definition (corresponds to sys.xml_schema_types).

| Column Name | Data Type | Description | |
|---|---|---|---|
| xml_component_id | int | Id of xml-component (type) to which this facet belongs. | |
| facet_id | int | Id (1-based ordinal) of facet, unique within component-id. | |
| kind | char(2) | Kind of facet, one of: | |
| | | | LG = Length |
| | | | LN = Minimum Length |
| | | | LX = Maximum Length |
| | | | PT = Pattern (regular expression) |
| | | | EU = Enumeration |
| | | | IN = Minimum Inclusive value |
| | | | IX = Maximum Inclusive value |
| | | | EN = Minimum Exclusive value |
| | | | EX = Maximum Exclusive value |
| | | | DT = Total Digits |
| | | | DF = Fraction Digits |
| | | | WS = White Space normalization |
| kind_desc | nvarchar (60) | Description of kind of facet, one of: | |
| | | | LENGTH |
| | | | MINIMUM_LENGTH |
| | | | MAXIMUM_LENGTH |
| | | | PATTERN |
| | | | ENUMERATION |
| | | | MINIMUM_INCLUSIVE_ VALUE |
| | | | MAXIMUM_INCLUSIVE_VALUE |
| | | | MINIMUM_EXCLUSIVE _VALUE |
| | | | MAXIMUM_EXCLUSIVE_VALUE |
| | | | TOTAL_DIGITS |
| | | | FRACTION_DIGITS |
| | | | WHITESPACE_NORMALIZATION |
| is_fixed | bit | If 1, the facet has a fixed, pre-specified value, Default is 0 (i.e., no fixed value) | |
| value | nvarchar (4000) | The fixed, pre-specified value of the facet. | |

Example: Rows in sys.xml_schema_facets after the XML schema collection myCollection are created.

| | | | | | |
|---|---|---|---|---|---|
| 15 | 1 | WS | WHITESPACE NORMALIZATION | 0 | preserve |
| 16 | 1 | WS | WHITESPACE NORMALIZATION | 1 | collapse |
| 17 | 1 | WS | WHITESPACE NORMALIZATION | 1 | collapse |
| 18 | 1 | WS | WHITESPACE NORMALIZATION | 1 | collapse |
| 19 | 1 | WS | WHITESPACE NORMALIZATION | 1 | collapse |
| 20 | 1 | WS | WHITESPACE_NORMALIZATION | 1 | collapse |
| 21 | 1 | WS | WHITESPACE NORMALIZATION | 1 | collapse |
| 22 | 1 | WS | WHITESPACE NORMALIZATION | 1 | collapse |
| 23 | 1 | WS | WHITESPACE NORMALIZATION | 1 | collapse |
| 24 | 1 | WS | WHITESPACE NORMALIZATION | 1 | collapse |
| 25 | 1 | WS | WHITESPACE NORMALIZATION | 1 | collapse |
| 26 | 1 | WS | WHITESPACE. NORMALIZATION | 1 | collapse |
| 27 | 1 | WS | WHITESPACE NORMALIZATION | 1 | collapse |
| 28 | 1 | WS | WHITESPACE_NORMALIZATION | 1 | collapse |
| 29 | 1 | WS | WHITESPACE NORMALIZATION | 1 | collapse |
| 30 | 1 | WS | WHITESPACE_NORMALIZATION | 1 | collapse |
| 31 | 1 | WS | WHITESPACE_NORMALIZATION | 1 | collapse |
| 32 | 1 | WS | WHITESPACE_NORMALIZATION | 1 | collapse |
| 33 | 1 | WS | WHITESPACE NORMALIZATION | 1 | collapse |
| 100 | 1 | WS | WHITESPACE NORMALIZATION | 0 | replace |
| 101 | 1 | WS | WHITESPACE NORMALIZATION | 0 | collapse |
| 102 | 1 | PT | PATTERN | 0 | ([a-zA-Z]{2}\|[iI]-[a-zA-Z]+\|[xX]-[a-zA-Z]{1,8}) (-[a-zA-Z]{1, 8})* |
| 103 | 1 | PT | PATTERN | 0 | \i\c* |
| 104 | 1 | PT | PATTERN | 0 | [\i-[:]][\c-[:]]* |
| 108 | 1 | PT | PATTERN | 0 | \c+ |
| 109 | 1 | DF | FRACTION_DIGITS | 1 | 0 |
| 110 | 1 | IX | MAXIMUM_INCLUSIVE_VALUE | 0 | 0 |
| 111 | 1 | IX | MAXIMUM INCLUSIVE VALUE | 0 | -1 |
| 112 | 1 | IN | MINIMUM INCLUSIVE VALUE | 0 | -9223372036854775808 |
| 112 | 2 | IX | MAXIMUM_INCLUSIVE_VALUE | 0 | 9223372036854775807 |
| 113 | 1 | IN | MINIMUM_INCLUSIVE_VALUE | 0 | -2147483648 |
| 113 | 2 | IX | MAXIMUM_INCLUSIVE_VALUE | 0 | 2147483647 |
| 114 | 1 | IN | MINIMUM INCLUSIVE VALUE | 0 | -32768 |
| 114 | 2 | IX | MAXIMUM INCLUSIVE VALUE | 0 | 32767 |
| 115 | 1 | IN | MINIMUM INCLUSIVE VALUE | 0 | -128 |
| 115 | 2 | IX | MAXIMUM INCLUSIVE_VALUE | 0 | 127 |
| 116 | 1 | IN | MINIMUM INCLUSIVE VALUE | 0 | 0 |
| 117 | 1 | IX | MAXIMUM_INCLUSIVE_VALUE | 0 | 18446744073709551615 |
| 118 | 1 | IX | MAXIMUM INCLUSIVE VALUE | 0 | 4294967295 |
| 119 | 1 | IX | MAXIMUM_INCLUSIVE VALUE | 0 | 65535 |
| 120 | 1 | IX | MAXIMUM INCLUSIVE VALUE | 0 | 255 |
| 121 | 1 | IN | MINIMUM INCLUSIVE_VALUE | 0 | 1 |
| 200 | 1 | LN | MINIMUM LENGTH | 0 | 1 |
| 201 | | LN | MINIMUM LENGTH | 0 | 1 |
| 202 | 1 | LN | MINIMUM LENGTH | 0 | 1 |

A sys.xml_schema_elements catalog view 1012 contains one row per xml-component that is an element (symbol_space of E).

| Column Name | Data Type | Description |
|---|---|---|
| <inherited columns> | -- | <Inherits from sys.xml>_schema_components> |
| is_default_fixed | bit | If 1, the default value is a fixed value (i.e. this value cannot be overridden in XML instance). Default is 0 (i.e., default value is not a fixed value for the element) |
| is_abstract | bit | If 1, the element is "abstract" and cannot be used in an instance document. A member of the element's substitution group must appear in the instance document. Default is 0 (i.e., element is not abstract). |
| is_nillable | bit | If 1, the element is nillable. Default is 0 (i.e. element is not nillable). |
| must_be_qualified | bit | If 1, the element must be explicitly namespace qualified. Default is 0 (i.e., element may be implicitly namespace qualified) |
| is_extension_blocked | bit | If 1, replacement with an instance of an extension type is blocked. Default is 0 (i.e., replacement with extension type is allowed) |
| is_restriction_blocked | bit | If 1, replacement with an instance of a restriction type is blocked. Default is 0 (i.e., replacement with restriction type is allowed) |
| is_substitution_blocked | bit | If 1, instance of a substitution group cannot be used. Default is 0 (i.e., replacement with substitution group is permitted) |
| is_final_extension | bit | If 1, replacement with an instance of an extension type is disallowed. Default is 0 (i.e., replacement in an instance of an extension type is allowed). |
| is_final_restriction | bit | If 1, replacement with an instance of a restriction type is disallowed. Default is 0 (i.e.,replacement in an instance of a restriction type is allowed). |
| default_value | nvarchar (4000) | Default value of the element or NULL if a default value is not supplied. |

A sys.xml_schema_model_groups catalog view 1014 contains one row per xml-component that is a Model-Group (symbol_space of M).

| Column Name | Data Type | Description | |
|---|---|---|---|
| <inherited columns> | - | <Inherits from sys.xml_schema_components> | |
| compositor | char(1) | Compositor kind of group, one of: | |
| | | | A = XSD <all> Group |
| | | | C = XSD <choice> Group |
| | | | S = XSD <sequence> Group |
| compositor_desc | nvarchar | Description of compositor kind of group, one of | |
| | (60) | | XSD_ALL_GROUP |
| | | | XSD_CHOICE_GROUP |
| | | | XSD_SEQUENCE_GROUP |

A sys.xml_schema_attributes catalog view 1016 contains one row per xml-component that is an Attribute (symbol_space of A).

| Column Name | Data Type | Description |
|---|---|---|
| <inherited columns> | -- | <Inherits from sys.xml_schema_components> |
| is_default_fixed | bit | If 1, the default value is a fixed value (i.e. this value cannot be overridden in XML instance). Default is 0 (i.e., default value is not a fixed value for the attribute) |
| must_be _qualified | bit | If 1, the attribute must be explicitly namespace qualified. Default is 0 (i.e., attribute may be implicitly namespace qualified) |
| default value | nvarchar (4000) | Default value of the attribute or NULL if a default value is not supplied. |

A sys.xml_schema_wildcards catalog view 1018 contains one row per xml-component that is an Attribute-Wildcard (kind of V) or Element-Wildcard (kind of W), both with symbol_space of N.

| Column Name | Data Type | Description | |
|---|---|---|---|
| <inherited columns> | -- | <Inherits from sys.xml_schema_components> | |
| process_content | char(1) | How contents are processed, one of: | |
| | | | S = Strict validation (must validate) |
| | | | L = Lax validation (validate if able) |
| | | | P = Skip validation |
| process_content_desc | nvarchar | Description of how contents are processed, one of | |
| | (60) | | STRICT_VALIDATION |
| | | | LAX_VALIDATION |
| | | | SKIP_VALIDATION |
| disallow_namespaces | bit | If 0 then namespaces enumerated in sys.xml_schema_wildcard_namespaces are the only ones allowed, else if 1 they are the only ones disallowed. | |

Example: Rows in sys.xml_schema_wildcards after the XML schema collection myCollection are created. Since the "books" XML schema does not have a wildcard, no entries for wildcards are created.

A sys.xml_schema_wildcard_namespaces catalog view 1020 contains one row per enumerated namespace for an xml-wildcard.

| Column Name | Data Type | Description |
|---|---|---|
| xml_component_id | int | Id of xml-component (wildcard) to which this applies. |
| namespace | sysname | Name / URI of the namespace used by the XML wildcard. |

Example: Rows in sys.xml_schema_wildcard_namespaces after the XML schema collection myCollection are created. Since the "books" XML schema does not have a wildcard, no entries for the namespace of wildcards are created.

A sys.xml_schema_component_placements catalog view 1022 contains one row per placement for xml-components.

| Column Name | Data Type | Description |
|---|---|---|
| xml_component_id | int | Id of xml-component that owns this placement, |
| placement_id | int | Id of placement, unique within owning xml-component. |
| placed_xml_Component_id | int | Id of placed xml-component. |
| is_default_fixed | bit | If 1, the default value is a fixed value (i.e. this value cannot be overridden in XML instance). Default is 0 (i.e., default value is not a fixed value) |
| min_occurences | int | Minimum number placed component occurs. |
| max_occurences | int | Minimum number placed component occurs. |
| default_value | nvarchar (4000) | Default value if one is supplied or NULL a default value is not supplied. |

Example: Rows in sys.xml_schema_component_placements after the XML schema collection myCollection are created.

| | | | | | | |
|---|---|---|---|---|---|---|
| 65556 | 1 | 65557 | 0 | 1 | 1 | NULL |
| 65557 | 1 | 65558 | 0 | 1 | 1 | NULL |
| 65557 | 2 | 65566 | 0 | 0 | 1 | NULL |
| 65557 | 3 | 65567 | 0 | 0 | 1 | NULL |
| 65557 | 4 | 65568 | 0 | 0 | 1 | NULL |
| 65558 | 1 | 65559 | 0 | 1 | 1 | NULL |
| 65558 | 2 | 65560 | 0 | 1 | 2.147E+09 | NULL |
| 65558 | 3 | 65565 | 0 | 1 | 1 | NULL |
| 65559 | 1 | 15 | 0 | 1 | 1 | NULL |
| 65560 | 1 | 65561 | 0 | 1 | 1 | NULL |
| 65561 | 1 | 65562 | 0 | 1 | 1 | NULL |
| 65562 | 1 | 65563 | 0 | 1 | 1 | NULL |
| 65562 | 2 | 65564 | 0 | 1 | 1 | NULL |
| 65563 | 1 | 15 | 0 | 1 | 1 | NULL |
| 65564 | 1 | 15 | 0 | 1 | 1 | NULL |
| 65565 | 1 | 19 | 0 | 1 | 1 | NULL |
| 65566 | 1 | 15 | 0 | 1 | 1 | NULL |
| 65567 | 1 | 109 | 0 | 1 | 1 | NULL |
| 65568 | 1 | 15 | 0 | 1 | 1 | NULL |

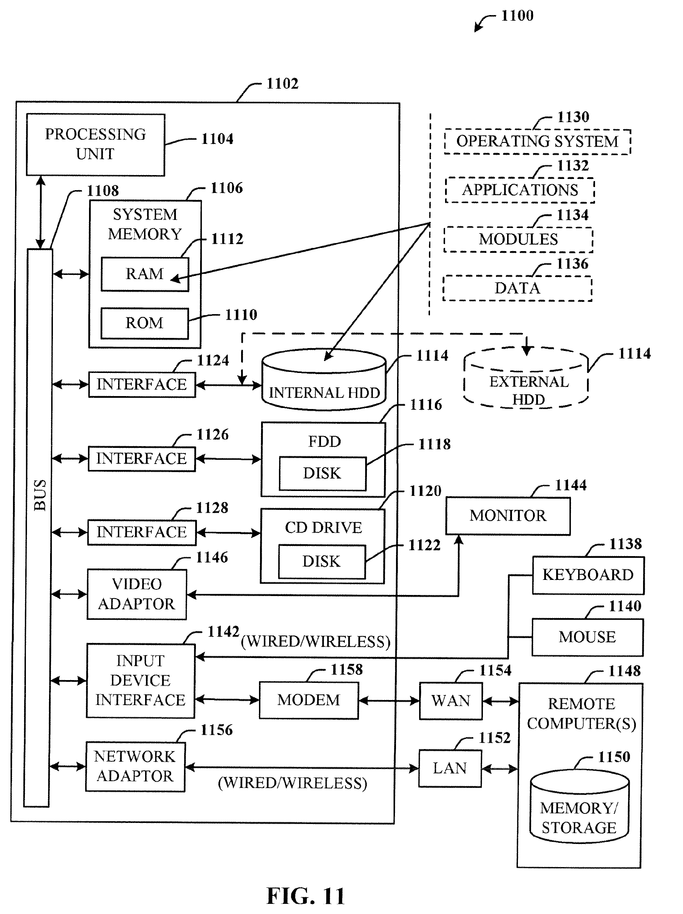

Referring now to FIG. 11, there is illustrated a block diagram of a computer operable to execute the disclosed translation architecture. In order to provide additional context for various aspects of the subject invention, FIG. 1 and the following discussion are intended to provide a brief, general description of a suitable computing environment 1100 in which the various aspects of the invention can be implemented. While the invention has been described above in the general context of computer-executable instructions that may run on one or more computers, those skilled in the art will recognize that the invention also can be implemented in combination with other program modules and/or as a combination of hardware and software.

Generally, program modules include routines, programs, components, data structures, etc., that perform particular tasks or implement particular abstract data types. Moreover, those skilled in the art will appreciate that the inventive methods can be practiced with other computer system configurations, including single-processor or multiprocessor computer systems, minicomputers, mainframe computers, as well as personal computers, hand-held computing devices, microprocessor-based or programmable consumer electronics, and the like, each of which can be operatively coupled to one or more associated devices.

The illustrated aspects of the invention may also be practiced in distributed computing environments where certain tasks are performed by remote processing devices that are linked through a communications network. In a distributed computing environment, program modules can be located in both local and remote memory storage devices.

A computer typically includes a variety of computer-readable media. Computer-readable media can be any available media that can be accessed by the computer and includes both volatile and nonvolatile media, removable and non-removable media. By way of example, and not limitation, computer readable media can comprise computer storage media and communication media. Computer storage media includes both volatile and nonvolatile, removable and non-removable media implemented in any method or technology for storage of information such as computer readable instructions, data structures, program modules or other data. Computer storage media includes, but is not limited to, RAM, ROM, EEPROM, flash memory or other memory technology, CD-ROM, digital video disk (DVD) or other optical disk storage, magnetic cassettes, magnetic tape, magnetic disk storage or other magnetic storage devices, or any other medium which can be used to store the desired information and which can be accessed by the computer.

Communication media typically embodies computer-readable instructions, data structures, program modules or other data in a modulated data signal such as a carrier wave or other transport mechanism, and includes any information delivery media. The term "modulated data signal" means a signal that has one or more of its characteristics set or changed in such a manner as to encode information in the signal. By way of example, and not limitation, communication media includes wired media such as a wired network or direct-wired connection, and wireless media such as acoustic, RF, infrared and other wireless media. Combinations of the any of the above should also be included within the scope of computer-readable media.

With reference again to FIG. 11, there is illustrated an exemplary environment 1100 for implementing various aspects of the invention that includes a computer 1102, the computer 1102 including a processing unit 1104, a system memory 1106 and a system bus 1108. The system bus 1108 couples system components including, but not limited to, the system memory 1106 to the processing unit 1104. The processing unit 1104 can be any of various commercially available processors. Dual microprocessors and other multi-processor architectures may also be employed as the processing unit 1104.

The system bus 1108 can be any of several types of bus structure that may further interconnect to a memory bus (with or without a memory controller), a peripheral bus, and a local bus using any of a variety of commercially available bus architectures. The system memory 1106 includes read only memory (ROM) 1110 and random access memory (RAM) 1112. A basic input/output system (BIOS) is stored in a non-volatile memory 1110 such as ROM, EPROM, EEPROM, which BIOS contains the basic routines that help to transfer information between elements within the computer 1102, such as during start-up. The RAM 1112 can also include a highspeed RAM such as static RAM for caching data.

The computer 1102 further includes an internal hard disk drive (HDD) 1114 *(e.g.,* EIDE, SATA), which internal hard disk drive 1114 may also be configured for external use in a suitable chassis (not shown), a magnetic floppy disk drive (FDD) 1116, *(e.g.,* to read from or write to a removable diskette 1118) and an optical disk drive 1120, (*e*.*g*., reading a CD-ROM disk 1122 or, to read from or write to other high capacity optical media such as the DVD). The hard disk drive 1114, magnetic disk drive 1116 and optical disk drive 1120 can be connected to the system bus 1108 by a hard disk drive interface 1124, a magnetic disk drive interface 1126 and an optical drive interface 1128, respectively. The interface 1124 for external drive implementations includes at least one or both of Universal Serial Bus (USB) and IEEE 1394 interface technologies.

The drives and their associated computer-readable media provide nonvolatile storage of data, data structures, computer-executable instructions, and so forth. For the computer 1102, the drives and media accommodate the storage of any data in a suitable digital format. Although the description of computer-readable media above refers to a HDD, a removable magnetic diskette, and a removable optical media such as a CD or DVD, it should be appreciated by those skilled in the art that other types of media which are readable by a computer, such as zip drives, magnetic cassettes, flash memory cards, cartridges, and the like, may also be used in the exemplary operating environment, and further, that any such media may contain computer-executable instructions for performing the methods of the invention.

A number of program modules can be stored in the drives and RAM 1112, including an operating system 1130, one or more application programs 1132, other program modules 1134 and program data 1136. All or portions of the operating system, applications, modules, and/or data can also be cached in the RAM 1112. It is appreciated that the invention can be implemented with various commercially available operating systems or combinations of operating systems.

A user can enter commands and information into the computer 1102 through one or more wired/wireless input devices, e.g., a keyboard 1138 and a pointing device, such as a mouse 1140. Other input devices (not shown) may include a microphone, an IR remote control, a joystick, a game pad, a stylus pen, touch screen, or the like. These and other input devices are often connected to the processing unit 1104 through an input device interface 1142 that is coupled to the system bus 1108, but can be connected by other interfaces, such as a parallel port, an IEEE 1394 serial port, a game port, a USB port, an IR interface, etc.

A monitor 1144 or other type of display device is also connected to the system bus 1108 *via* an interface, such as a video adapter 1146. In addition to the monitor 1144, a computer typically includes other peripheral output devices (not shown), such as speakers, printers, etc.

The computer 1102 may operate in a networked environment using logical connections *via* wired and/or wireless communications to one or more remote computers, such as a remote computer(s) 1148. The remote computer(s) 1148 can be a workstation, a server computer, a router, a personal computer, portable computer, microprocessor-based entertainment appliance, a peer device or other common network node, and typically includes many or all of the elements described relative to the computer 1102, although, for purposes of brevity, only a memory storage device 1150 is illustrated. The logical connections depicted include wired/wireless connectivity to a local area network (LAN) 1152 and/or larger networks, *e.g.*, a wide area network (WAN) 1154. Such LAN and WAN networking environments are commonplace in offices, and companies, and facilitate enterprise-wide computer networks, such as intranets, all of which may connect to a global communication network, e.g., the Internet.

When used in a LAN networking environment, the computer 1102 is connected to the local network 1152 through a wired and/or wireless communication network interface or adapter 1156. The adaptor 1156 may facilitate wired or wireless communication to the LAN 1152, which may also include a wireless access point disposed thereon for communicating with the wireless adaptor 1156.

When used in a WAN networking environment, the computer 1102 can include a modem 1158, or is connected to a communications server on the WAN 1154, or has other means for establishing communications over the WAN 1154, such as by way of the Internet. The modem 1158, which can be internal or external and a wired or wireless device, is connected to the system bus 1108 *via* the serial port interface 1142. In a networked environment, program modules depicted relative to the computer 1102, or portions thereof, can be stored in the remote memory/storage device 1150. It will be appreciated that the network connections shown are exemplary and other means of establishing a communications link between the computers can be used.

The computer 1102 is operable to communicate with any wireless devices or entities operatively disposed in wireless communication, e.g., a printer, scanner, desktop and/or portable computer, portable data assistant, communications satellite, any piece of equipment or location associated with a wirelessly detectable tag (*e.g.*, a kiosk, news stand, restroom), and telephone. This includes at least Wi-Fi and Bluetooth™ wireless technologies. Thus, the communication can be a predefined structure as with a conventional network or simply an ad hoc communication between at least two devices.

Wi-Fi, or Wireless Fidelity, allows connection to the Internet from a couch at home, a bed in a hotel room, or a conference room at work, without wires. Wi-Fi is a wireless technology similar to that used in a cell phone that enables such devices, e.g., computers, to send and receive data indoors and out; anywhere within the range of a base station. Wi-Fi networks use radio technologies called IEEE 802.11 (a, b, g, etc.) to provide secure, reliable, fast wireless connectivity. A Wi-Fi network can be used to connect computers to each other, to the Internet, and to wired networks (which use IEEE 802.3 or Ethernet). Wi-Fi networks operate in the unlicensed 2.4 and 5 GHz radio bands, at an 11 Mbps (802.11a) or 54 Mbps (802.11b) data rate, for example, or with products that contain both bands (dual band), so the networks can provide real-world performance similar to the basic 10BaseT wired Ethernet networks used in many offices.

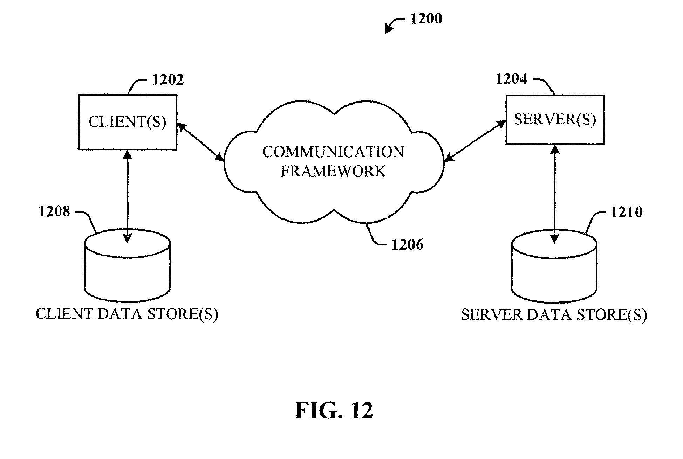

Referring now to FIG. 12, there is illustrated a schematic block diagram of an exemplary translation computing environment 1200. The system 1200 includes one or more client(s) 1202. The client(s) 1202 can be hardware and/or software (*e*.*g*., threads, processes, computing devices). The client(s) 1202 can house cookie(s) and/or associated contextual information by employing the invention, for example.

The system 1200 also includes one or more server(s) 1204. The server(s) 1204 can also be hardware and/or software (*e.g.*, threads, processes, computing devices). The servers 1204 can house threads to perform transformations by employing the invention, for example. One possible communication between a client 1202 and a server 1204 can be in the form of a data packet adapted to be transmitted between two or more computer processes. The data packet may include a cookie and/or associated contextual information, for example. The system 1200 includes a communication framework 1206 (*e*.*g*., a global communication network such as the Internet) that can be employed to facilitate communications between the client(s) 1202 and the servers) 1204.

Communications can be facilitated via a wired (including optical fiber) and/or wireless technology. The client(s) 1202 are operatively connected to one or more client data store(s) 1208 that can be employed to store information local to the client(s) 1202 (*e.g*., cookie(s) and/or associated contextual information). Similarly, the server(s) 1204 are operatively connected to one or more server data store(s) 1210 that can be employed to store information local to the servers 1204.

What has been described above includes innovative examples. It is, of course, not possible to describe every conceivable combination of components or methodologies for purposes of describing the subject invention, but one of ordinary skill in the art may recognize that many further combinations and permutations are possible. Accordingly, the invention is intended to embrace a11 such alterations, modifications and variations that fall within the spirit and scope of the appended claims. Furthermore, to the extent that the term "includes" is used in either the detailed description or the claims, such term is intended to be inclusive in a manner similar to the term "comprising" as "comprising" is interpreted when employed as a transitional word in a claim.

## Claims

1. A system that facilitates the translation of data, comprising:
a translation component that consumes schema data which includes a schema structure, validates the schema structure, and persists in memory a representation of the schema structure as a relational format.

2. The system of claim 1, wherein the representation of the schema structure as the relational format is persisted in a symbol table.

3. The system of claim 2, wherein the symbol table is traversed when the schema structure is validated.

4. The system of claim 1, wherein the schema data is an XML schema structure.

5. The system of claim 1, wherein metadata tables that describe a structure of the schema types are populated in the memory.

6. The system of claim 5, wherein the metadata tables include a component table that stores basic components of the schema data, a reference table that stores a derivation structure, a placement table that stores a hierarchy of complex types, a facet table that stores simple type facets, and a qualified name table that stores names of the basic components and wildcard namespace names.

7. The system of claim 1, wherein the schema data is decomposed into a set of related schema components.

8. The system of claim 1, wherein the schema data is decomposed into a set of related schema components each of which is associated with an ID.

9. A server that employs the system of claim 1.

10. A computer readable medium having stored thereon computer executable instructions for carrying out the system of claim 1.

11. The system of claim 1, wherein the schema data is decomposed into a set of relational tables, and a most frequently used piece of the schema data is loaded and cached.

12. The system of claim 1, wherein the schema data is loaded as XML schema components into the memory as read-only objects such that multiple users can use the in-memory objects for validation.

13. A computer-implemented method of translating data, comprising:
receiving XML data that includes a schema structure;
validating the schema structure;
translating the schema structure into relational tables; and
persisting a portion of the relational tables in memory.

14. The method of claim 13, further comprising an act of loading into the memory portions of the relation tables that are most frequently used.

15. The method of claim 13, further comprising an act of persisting in a type cache portions of the relational tables that relate to at least one of a type, an attribute, and an element definition.

16. The method of claim 13, wherein the act of persisting stores the schema structure in a symbol table that is traversed when the schema structure is validated.

17. The method of claim 13, wherein the act of validating loads only parts of the schema structures that are used.

18. The method of claim 13, the act of validating includes instance validation wherein only components necessary for validation are loaded.

19. The method of claim 13, further comprising an act of exposing portions of the persisted relational tables as read-only views.

20. A system that facilitates data translation, comprising:
means for receiving XML data that includes a schema structure;
means for validating the schema structure;
means for translating the schema structure into relational tables;
means for persisting a portion of the relational tables in a memory; and
means for automatically removing entries in the memory at a higher rate in response to a pressure notification signal.
